# DEMANDE DE BREVET EUROPEEN

(11) **EP 3 255 774 A1**
(43) Date de publication de la demande: **13.12.2017**
(21) Numéro de dépôt: 16305662.5
(22) Date de dépôt: 07.06.2016
(51) Int. Cl.: H02M 5/40, H02M 1/12

(54) **SYSTÈME DE CONVERSION D'ÉNERGIE ÉLECTRIQUE DÉLIVRÉE PAR UN RÉSEAU ET PROCÉDÉ DE CONVERSION MIS EN OEUVRE AU MOYEN D'UN TEL SYSTÈME DE CONVERSION**

(71) Demandeur: GE Energy Power Conversion Technology Ltd, Rugby Warwickshire CV21 1BU (GB)
(72) Inventeur: DELANOE, Jérôme, Territoire Belfort 90008 (FR); LELEU, Emmanuel, 70400 Chalonvillars (FR)
(74) Mandataire: Casalonga

(57) **Abrégé**

Ce système de conversion d'énergie électrique délivrée par un réseau d'alimentation comprend un convertisseur (26) et au moins un étage de limitation de courant homopolaire circulant dans le convertisseur.

Le ou chaque étage de limitation comporte un circuit actif de compensation comprenant un composant magnétique (15) et une source de tension (33) raccordée au composant magnétique, ladite source de tension et ledit composant magnétique étant adaptés pour injecter en série avec le convertisseur une tension de compensation active des tensions homopolaires générées par le convertisseur.

## Description

La présente invention concerne un système de conversion d'énergie électrique fournie par un réseau d'alimentation, du type comprenant :
- un convertisseur comprenant un étage redresseur destiné à être raccordé au réseau d'alimentation et apte à convertir le courant alternatif fourni par le réseau en courant continu,
- un étage onduleur comprenant un ensemble d'onduleurs raccordés en parallèle à un bus continu raccordé à la sortie du redresseur et apte à convertir le courant continu fourni par le redresseur en courant alternatif, et
- au moins un étage de limitation du courant homopolaire circulant dans le convertisseur.

L'invention se rapporte également à un procédé de conversion d'énergie électrique au moyen d'un tel système de conversion.

Dans les systèmes électrotechniques alimentés à partir de systèmes d'alimentation utilisant des onduleurs de tension, des courants homopolaires sont engendrés en raison de la stratégie de commande des onduleurs, lesquels induisent des perturbations en mode commun dans les systèmes, notamment des surtensions dans les machines électriques, des perturbations électromagnétiques limitant la compatibilité électromagnétique CEM des appareils, des perturbations dans le réseau d'alimentation, dans le cadre d'un système directement connecté sans transformateur entre le réseau et le système, ...

Ces courants homopolaires circulent en premier lieu vers la terre, en circulant dans une boucle passant par les onduleurs de tension, les capacités parasites du système, telles que les capacités parasites des machines tournantes et/ou des câbles, et la terre.

Il a été proposé, dans le document EP 2 413 485, de limiter les courants homopolaires en modifiant la régulation du convertisseur en interdisant certains états de commutation. Les courants homopolaires sont en outre éliminés en utilisant un circuit de limitation du courant en mode commun. Un tel circuit comprend des enroulements électromagnétiques primaires raccordés entre un redresseur et un onduleur du convertisseur, un noyau de couplage magnétique des enroulements primaires, et un enroulement secondaire connecté en série avec une résistance d'amortissement et associé à un deuxième noyau magnétique de couplage de l'enroulement secondaire avec les enroulements primaires.

Bien qu'avantageuse à maints égards, cette solution ne permet toutefois pas de compenser divers types de courants de circulation homopolaires et ne permet que de compenser le courant homopolaire qui circule vers la terre, selon une boucle passant par les onduleurs de tension et les capacités parasites du système.

En effet, il est souvent souhaitable d'utiliser des onduleurs de tension raccordés en parallèle afin de permettre au convertisseur de manipuler des courants plus élevés et ce, dans un encombrement réduit.

Lorsque les onduleurs de tension sont raccordés en parallèle, trois types de courants de circulation homopolaires peuvent apparaître.

Il s'agit en premier lieu du courant de circulation homopolaire inter-onduleurs qui apparaît en raison de l'entrelacement des tensions. Ce courant est intrinsèque au fonctionnement du système et le nombre de boucles de circulation du courant homopolaire augmente proportionnellement au nombre d'onduleurs en parallèle.

Il s'agit en second lieu du courant de circulation homopolaire inter-onduleurs parasite, qui est dû à une imprécision des différentes grandeurs physiques utilisées pour le pilotage des éléments constitutifs du convertisseur. Il peut par exemple s'agir d'erreurs de synchronisation ou d'une imprécision dans les commandes des convertisseurs. Ces courants homopolaires parasites circulent selon les mêmes trajets que les courants homopolaires inter-onduleurs provenant de l'entrelacement des tensions.

Il s'agit enfin du courant de circulation homopolaire à la terre évoqué précédemment.

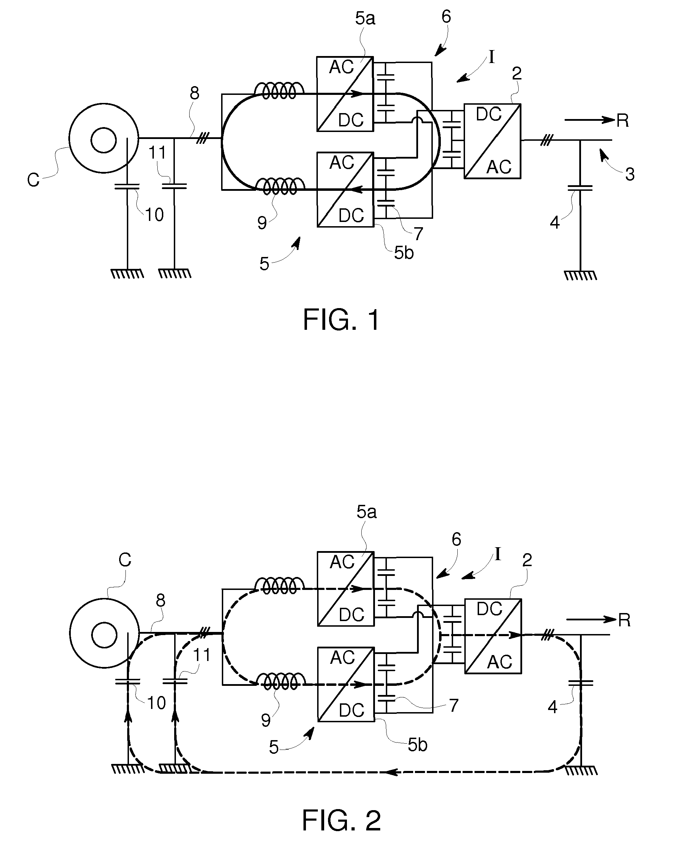

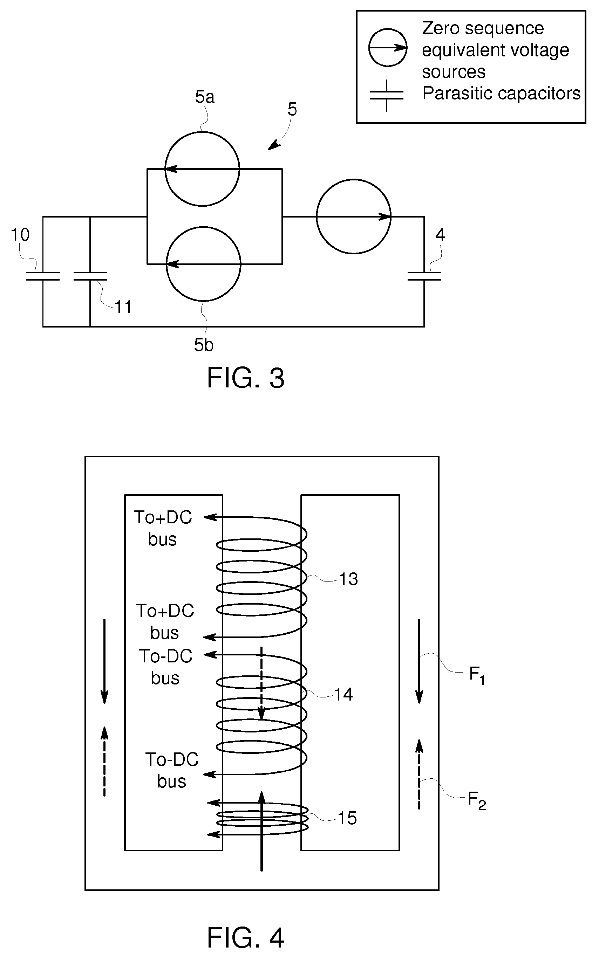

On a représenté sur les figures 1 et 2 un exemple de structure électrotechnique d'alimentation électrique d'une charge C dans laquelle sont susceptibles d'apparaître ces types de courants homopolaires et sur la figure 3 le schéma équivalent homopolaire de la structure des figures 1 et 2.

La structure électrotechnique des figures 1 et 2 comporte un convertisseur I raccordé entre un réseau d'alimentation alternatif R et la charge C et comprenant un redresseur commandé 2, également appelé AFE pour « Active Front End », raccordé au réseau d'alimentation par un câble 3, schématisé par sa capacité parasite 4, et un étage onduleur 5 comprenant plusieurs onduleurs 5a et 5b raccordés en parallèle au redresseur 2 par un bus continu 6 doté de condensateurs, tels que 7, et à la charge C par un câble 8 d'alimentation par l'intermédiaire d'inductances de couplage 9. La charge C et le câble d'alimentation 8 sont ici représentés par leurs capacités parasites respectives 10 et 11.

Comme indiqué précédemment, en raison du raccordement en parallèle des onduleurs 5a et 5b, un courant homopolaire inter-onduleurs Ihi, s'il y a entrelacement des tensions, et un courant homopolaire inter-onduleurs parasite Ihip circulent en boucle entre les onduleurs, le bus continu et les inductances de couplage 9 (figure 1).

De même, un courant homopolaire de terre Iht circule en boucle entre les onduleurs, le redresseur et les diverses capacités parasites des câbles et de la charge, et la terre (figure 2).

En se référant au schéma équivalent homopolaire de la figure 3, sur laquelle seules les impédances principales ont été conservées et sur laquelle les tensions homopolaires des onduleurs et du redresseur sont représentées par des sources de tension monophasées, il apparaît que les sources de tension homopolaires sont raccordées en parallèle en n'étant séparées par aucune impédance, ce qui provoque l'apparition d'un courant de circulation en théorie illimité. On notera en outre que l'essentiel de la tension homopolaire résultante se retrouve sur les capacités parasites des charges et des câbles, ce qui engendre des sollicitations diélectriques importantes.

On pourra également se référer au document WO 2015/108614 qui décrit un convertisseur bidirectionnel de puissance pour système de distribution d'énergie électrique comprenant des circuits convertisseurs raccordés en parallèle pour permettre l'obtention de niveaux de courants élevés et, par conséquent, de niveaux de puissances électriques élevés.

Les courants indésirables de circulation dans les convertisseurs, à basse fréquence, sont supprimés au moyen d'un contrôleur homopolaire qui maintient la valeur moyenne du courant de circulation à zéro en utilisant des inductances de couplage ou des circuits de contrôle de type proportionnel-intégral.

Mais la solution décrite dans ce document n'est pas non plus adaptée pour supprimer les différents types de courants homopolaires circulant dans le convertisseur.

Le but de l'invention est donc de pallier les divers inconvénients précités et de proposer un système d'alimentation d'une charge en courant alternatif capable de supprimer les différents types de courants homopolaires susceptibles de circuler dans le système d'alimentation et ce, quelle que soit sa configuration.

L'invention a donc pour objet, selon un premier aspect, un système de conversion d'énergie électrique délivrée par un réseau d'alimentation, comprenant un convertisseur et au moins un étage de limitation de courant homopolaire circulant dans le convertisseur.

Le ou chaque étage de limitation comporte un circuit actif de compensation comprenant un composant magnétique et une source de tension raccordée au composant magnétique, ladite source de tension et ledit composant magnétique étant adaptés pour injecter en série une tension de compensation active des tensions homopolaires générées par le convertisseur.

Cette tension de compensation s'oppose aux sources de tension homopolaire des convertisseurs avec pour conséquence de limiter les différents courants homopolaires précités.

Il est ainsi possible de limiter tous types de courants homopolaires, aussi bien les courants circulant entre les onduleurs raccordés en parallèle que les courants homopolaires de terre circulant à travers les capacités parasites.

Il est en outre possible de limiter les courants homopolaires, aussi bien à haute fréquence qu'à basse fréquence.

Selon une autre caractéristique de ce système d'alimentation, le circuit de compensation comporte une bobine enroulée autour d'un noyau magnétique et raccordée à la source de tension.

Dans un mode de mise en oeuvre, le convertisseur comporte un étage onduleur comprenant un ensemble d'au moins un onduleur raccordé en parallèle à un bus continu raccordé à la sortie de l'étage redresseur et apte à convertir le courant continu fourni par l'étage redresseur.

Dans un mode de réalisation, le circuit actif de compensation comprend un transformateur monophasé raccordé à chaque polarité du bus continu entre l'étage onduleur et l'étage redresseur et équipé dudit circuit actif de compensation.

Le circuit actif de compensation peut être formé par un enroulement tertiaire du transformateur monophasé couplé magnétiquement aux enroulements primaire et secondaire dudit transformateur.

Le système d'alimentation peut en outre comporter une inductance de ligne raccordée du côté alternatif d'au moins l'un des étages onduleur et redresseur.

Le système d'alimentation peut également comporter un transformateur d'interphase raccordé du côté alternatif d'au moins l'un des étages onduleur et redresseur.

Dans un autre mode de réalisation, dans lequel le convertisseur comporte un ensemble de branches parallèles comprenant chacune un étage onduleur et un étage redresseur, le circuit actif de compensation comprend des transformateurs d'interphase triphasés permettant de raccorder en parallèle les branches parallèles du convertisseur et comprenant chacun une colonne de retour de flux magnétique équipée dudit circuit actif de compensation.

Le circuit actif de compensation peut ainsi comporter un enroulement raccordé à la source de tension et bobiné autour de la colonne de retour de flux magnétique.

Dans un mode de mise en oeuvre, le convertisseur comporte un ensemble de branches parallèles comportant chacune un étage onduleur et un étage redresseur, le circuit actif de compensation comprenant un transformateur d'interphase à colonne de retour de flux magnétique pour chaque branche.

Dans un mode de réalisation, dans lequel le convertisseur comporte un ensemble de branches parallèles comprenant chacune un étage onduleur et un étage redresseur, le système d'alimentation peut en outre comporter un ensemble de transformateurs d'interphase permettant de raccorder en parallèle les branches parallèles du convertisseur, à l'opposé des transformateurs d'interphase à colonne de retour magnétique.

Le système de conversion peut ainsi comporter un ensemble de transformateurs d'interphase, avec colonne de retour de flux magnétique d'un côté AC du système et sans colonne de retour de flux magnétique de l'autre côté AC.

Selon un autre mode de réalisation, dans lequel le convertisseur comporte un ensemble de branches parallèles comprenant chacune un étage onduleur et un étage redresseur, le circuit actif de compensation comprend des éléments inductifs triphasés adaptés pour raccorder en parallèle les branches parallèles du convertisseur et comprenant chacun une colonne de retour de flux magnétique équipée dudit circuit actif de compensation.

La colonne de retour de flux magnétique comporte avantageusement un enroulement bobiné autour de la colonne de retour de flux magnétique.

Dans un mode de mise en oeuvre, le système comporte un ensemble de branches parallèles comportant chacune un étage onduleur et un étage redresseur, le circuit actif de compensation comprenant un élément inductif triphasé à colonne de retour de flux magnétique pour chaque branche.

Le système d'alimentation peut en outre comporter un ensemble d'éléments inductifs triphasés permettant de raccorder en parallèle les branches parallèles du convertisseur, à l'opposé des éléments inductifs triphasés à colonne de retour de flux magnétique.

L'invention a également pour objet, selon un second aspect, un procédé de conversion d'énergie électrique délivrée par une source d'alimentation au moyen d'un convertisseur raccordé au réseau d'alimentation, dans lequel on réduit le courant homopolaire circulant dans le convertisseur.

Le courant homopolaire est réduit en injectant en série avec le convertisseur une tension de compensation active des tensions homopolaires, ladite tension de compensation étant fournie par un circuit actif de compensation comprenant un composant magnétique et une source de tension raccordée au composant magnétique.

D'autres buts, caractéristiques et avantages de l'invention apparaîtront à la lecture de la description suivante, donnée uniquement à titre d'exemple non limitatif, et faite en référence aux dessins annexés sur lesquels :
- les figures 1 à 3, dont il a déjà été fait mention, sont des schémas illustrant la circulation de courants homopolaires dans un système d'alimentation conventionnel ;
- les figures 4, 5 et 6 illustrent divers modes de réalisation d'un circuit magnétique utilisé pour la compensation active des tensions homopolaires, pour un système de conversion d'énergie électrique conforme à l'invention ;
- la figure 7 illustre un exemple de réalisation d'un système d'alimentation d'une charge en courant alternatif selon l'invention, comprenant une architecture ayant un unique onduleur et un unique redresseur, et fondé sur l'utilisation d'un transformateur monophasé pour la compensation active série des composantes homopolaires ;
- la figure 8 représente le schéma homopolaire équivalent simplifié du système décrit dans la figure 7 ;
- la figure 9 illustre une variante du système d'alimentation de la figure 7, comprenant un convertisseur ayant une structure à plusieurs onduleurs et redresseurs en parallèle ;
- la figure 10 illustre une autre variante du système d'alimentation de la figure 9, ayant un bus continu commun ;
- la figure 11 illustre un autre mode de réalisation d'un système d'alimentation d'une charge conforme à l'invention, utilisant des transformateurs interphase triphasés et ayant des bus continus indépendants ; et
- la figure 12 illustre un troisième mode de réalisation d'un système d'alimentation d'une charge conforme à l'invention, utilisant des éléments inductifs triphasés et ayant des bus continus indépendants.

On se référera tout d'abord aux figures 4 à 6 qui illustrent divers modes de réalisation d'un circuit actif de compensation pour système de conversion d'énergie électrique ou, de manière générale, pour structure électrotechnique.

La description suivante s'applique, de manière nullement limitative, à une source d'alimentation d'une charge en courant alternatif.

Dans ces divers modes de réalisation, le circuit actif de compensation comprend un composant magnétique associé à une source de tension pour générer un flux magnétique homopolaire apte à engendrer une tension de compensation active des composantes homopolaires véhiculées dans les boucles de circulation de courant homopolaire de terre Iht et des boucles de circulation inter-onduleurs Ihi et Ihip.

Comme on le voit sur ces figures, le composant magnétique est réalisé sous la forme d'une bobine enroulée autour d'un noyau magnétique couplé magnétiquement aux autres enroulements du composant connecté aux convertisseurs de la structure électrotechnique de manière à générer un flux magnétique F1 s'opposant au flux F2 créant les courants homopolaires circulant dans le convertisseur.

Dans le mode de réalisation de la figure 4, le composant électrique est constitué par un transformateur monophasé avec tertiaire, comprenant un noyau commun 12 sur lequel sont enroulés deux bobinages concentriques 13 et 14 raccordés respectivement aux polarités positive et négative d'un bus continu DC et une bobine 15 supplémentaire enroulée autour du même noyau magnétique 12 et aux bornes de laquelle est raccordée une source de tension d'appoint (non représentée sur cette figure) pour annuler activement les composantes homopolaires du courant circulant dans les boucles de circulation à la terre et les boucles inter-onduleurs.

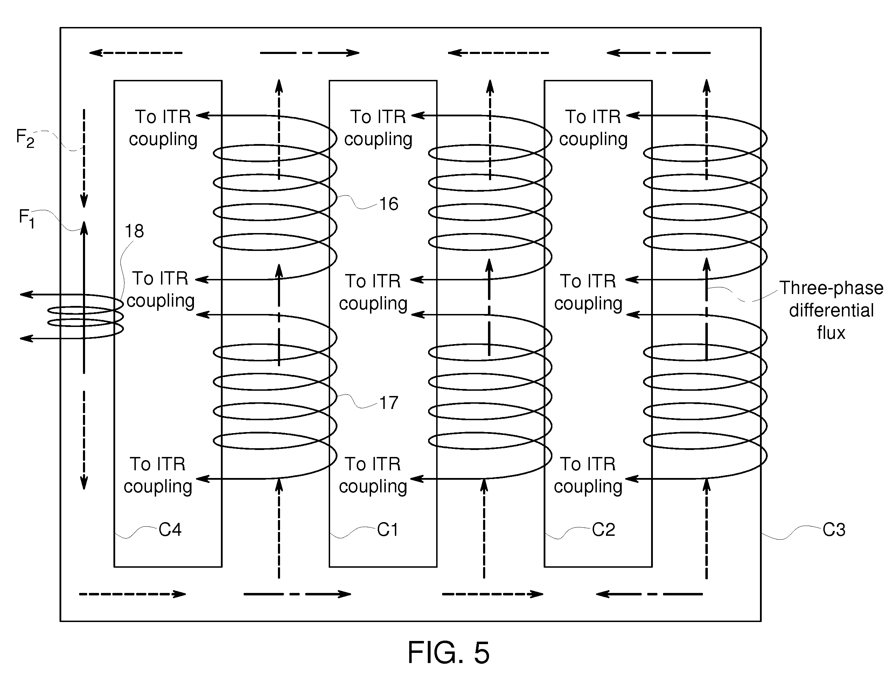

Dans le mode de réalisation de la figure 5, le composant électrique est constitué par un transformateur d'interphase triphasé comprenant un noyau magnétique comprenant trois colonnes C1, C2 et C3 sur chacune desquelles sont enroulées deux bobines telles que 16 et 17 concentriques et comprenant une colonne magnétique de retour de flux magnétique C4 autour de laquelle est enroulée une bobine 18 raccordée à une source de tension d'appoint. La tension est choisie de manière à engendrer un flux F1 s'opposant au flux homopolaire F2 générant les composantes homopolaires dans le convertisseur.

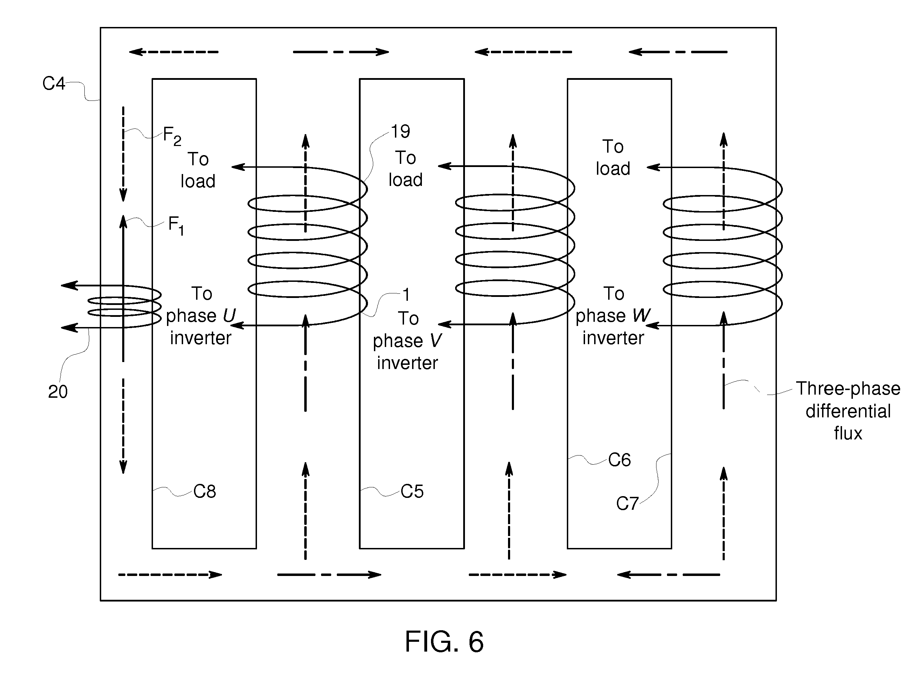

Dans le mode de réalisation de la figure 6, le composant électrique est constitué par un élément inductif triphasé comprenant également un noyau magnétique doté de trois colonnes C5, C6 et C7 autour desquelles est enroulée une bobine 19 ainsi qu'une colonne magnétique C8 de retour de flux magnétique comprenant une bobine 20 raccordée à une source de tension apte à générer dans le noyau magnétique un flux magnétique F1 s'opposant au flux homopolaire F2 créant les courants homopolaires.

Dans ces divers modes de mise en oeuvre, les sources de tension sont contrôlées de sorte que les trois types de courant de circulation homopolaire soient annulés ou limités par la tension alors injectée par les sources d'appoint connectées aux enroulements additionnels 15, 20 et 18. Comme cela sera décrit en détail par la suite, lorsqu'un tel circuit actif de compensation est inséré dans un convertisseur d'un système d'alimentation d'une charge, l'annulation des courants de circulation homopolaires a pour effet de pouvoir conserver les avantages liés à la génération de composantes homopolaires par les onduleurs, ainsi que les avantages liés à l'entrelacement des tensions des différents onduleurs en parallèle, tout en protégeant les charges et les câbles des surtensions, protégeant les onduleurs contre les surcharges thermiques et évitant la saturation des composants magnétiques chargés de limiter les courants homopolaires, y compris les composantes à basse fréquence.

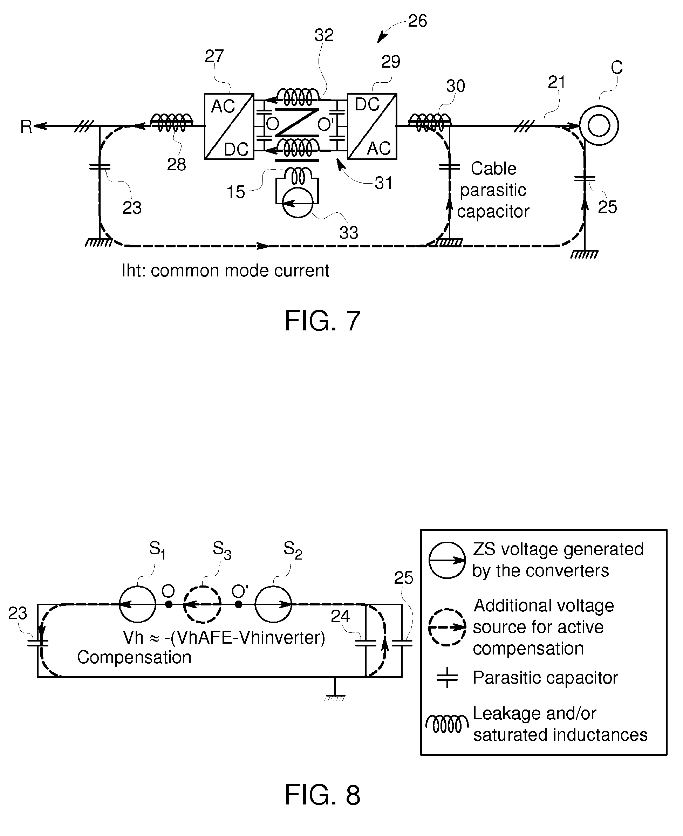

On se référera maintenant aux figures 7 et 8 qui illustrent un premier mode de réalisation d'un système d'alimentation d'une charge en courant alternatif utilisant un composant actif de compensation réalisé à partir d'un transformateur monophasé avec tertiaire.

Sur cette figure, on reconnaît la charge C alimentée à partir d'un réseau d'alimentation alternatif R par l'intermédiaire de câbles d'alimentation triphasée 21.

Sur ces deux figures, l'impédance des câbles et de la charge ont été représentées par leurs capacités parasites 23, 24 et 25.

Le système d'alimentation illustré sur cette figure comporte également un convertisseur 26 comprenant un étage redresseur 27 raccordé au réseau R par une inductance de ligne 28, un étage onduleur 29 raccordé au câble d'alimentation 21 de la charge C par l'intermédiaire d'une inductance de ligne 30 et un bus continu 31 reliant les deux étages 27 et 29 du convertisseur 26.

Dans ce mode de réalisation, le convertisseur 26 comporte un unique redresseur et un unique onduleur reliés par un même bus continu.

Le courant homopolaire est ici compensé en utilisant un transformateur monophasé avec tertiaire 32 tel que celui décrit précédemment en référence à la figure 4 et raccordé à une source de tension de compensation 33 branchée aux bornes de la bobine 15.

Le schéma homopolaire équivalent du circuit de la figure 7 est illustré sur la figure 8 sur laquelle seules les impédances essentielles du circuit ont été conservées et sur laquelle l'onduleur et le redresseur ont été schématisés par des sources de tension monophasées respectivement S1 et S2.

Comme on le voit, le circuit actif de compensation constitue une source S3 de tension de compensation active série des tensions homopolaires générées par le convertisseur.

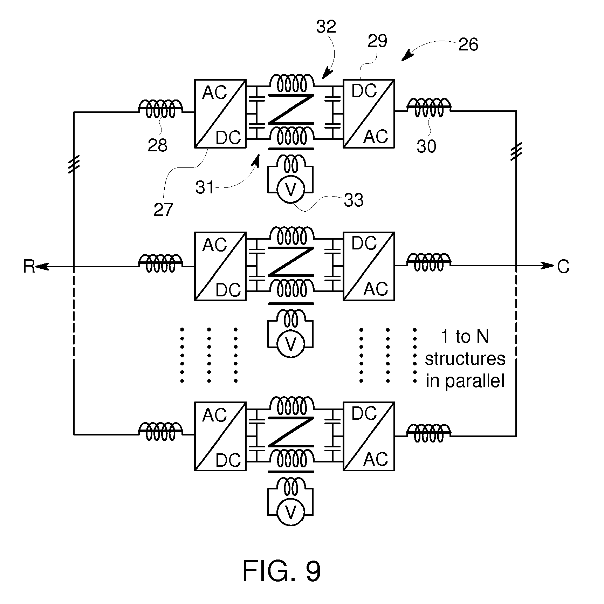

Dans le mode de réalisation de la figure 7, le convertisseur comporte un unique redresseur 27 associé à un unique onduleur 29 par un bus continu 31 unique doté d'un transformateur monophasé 32. En référence à la figure 9, il est également possible, en variante, de réaliser le convertisseur sous la forme de plusieurs branches en parallèle ayant chacune une structure identique à celle décrite précédemment en référence à la figure 7 et raccordées chacune au réseau et à la charge par l'intermédiaire d'inductances de lignes (ou d'un transformateur interphase triphasé) 28 et 30.

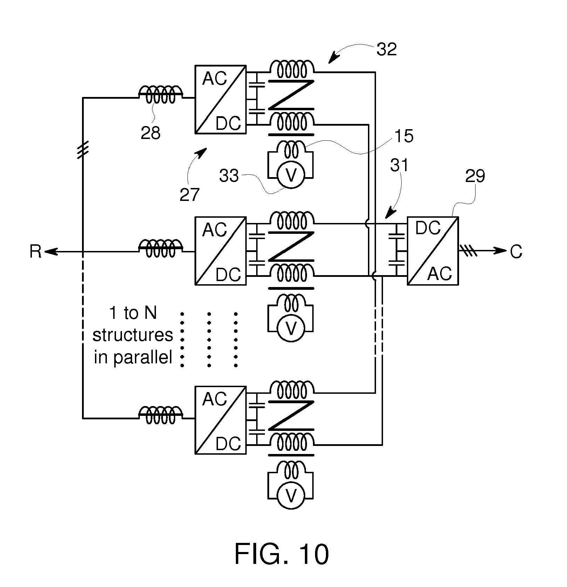

Selon une autre structure visible sur la figure 10, le convertisseur comporte un bus continu 31 commun associé à un unique onduleur 29 et plusieurs redresseurs 27 raccordés en parallèle associés chacun à un transformateur monophasé 32 équipé d'une bobine 15 raccordée à une source de tension 33.

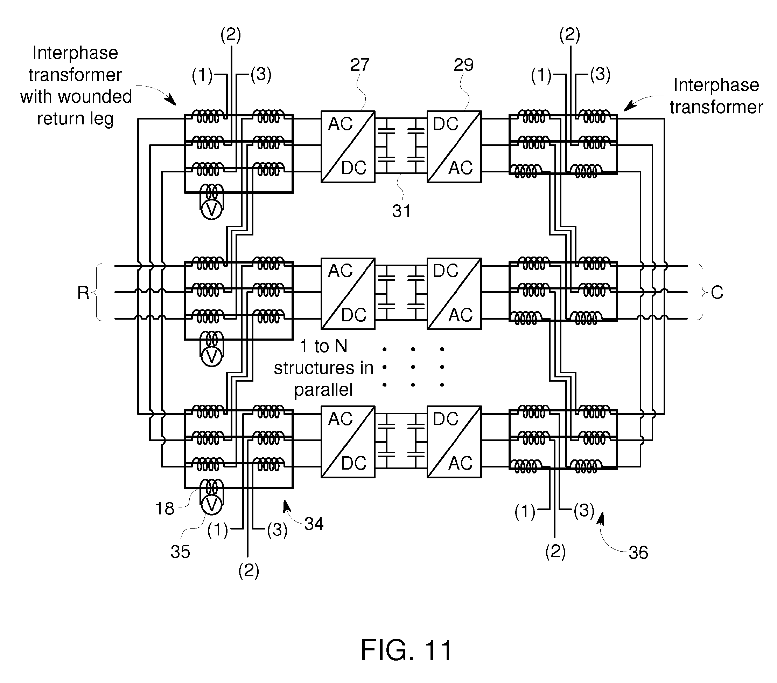

Selon un autre mode de réalisation illustré à la figure 11, le convertisseur du système d'alimentation comporte plusieurs branches raccordées en parallèle comprenant chacune un redresseur 27 et un onduleur 29 raccordés par un bus continu 31 de sorte que les bus continus des branches parallèles soient ici indépendants.

Dans ce mode de réalisation, le convertisseur est raccordé à la charge, d'une part, et au réseau, d'autre part, en utilisant un transformateur d'interphase triphasé avec colonne de retour bobinée, référencé 34, identique à celui décrit précédemment en référence à la figure 5 et comprenant une bobine 18 raccordée à une source de tension 35 apte à annuler les composantes homopolaires circulant dans le convertisseur et par un transformateur d'interphase 36 dépourvu de colonne de retour magnétique.

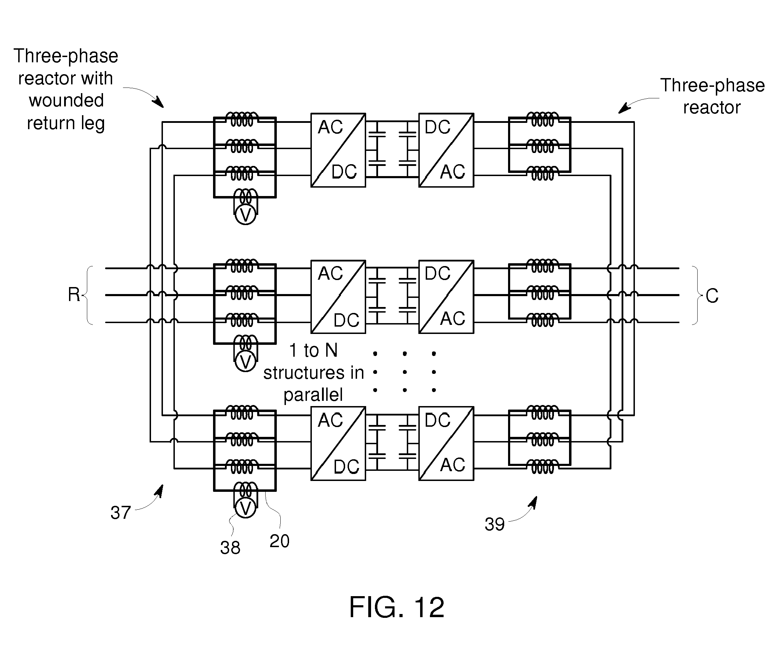

Enfin, en se référant à la figure 12, dans un autre mode de réalisation, le convertisseur, qui comporte également plusieurs branches en parallèle comprenant chacune un redresseur 27 et un onduleur 29 raccordé par un bus continu 31, est raccordé au réseau, d'une part, et à la charge, d'autre part, en utilisant un élément inductif triphasé 37, identique au composant décrit précédemment en référence à la figure 6 et comprenant une bobine 20 associée à une source de tension 38 et par des éléments inductifs triphasés 39 dépourvus de colonne de retour magnétique.

Comme on le conçoit, l'invention qui vient d'être décrite, qui utilise un circuit actif de compensation comprenant une bobine associée à une source de tension permet d'injecter en série avec les convertisseurs une tension annulant les courants homopolaires à la terre et inter-onduleurs. On pourra à cet égard piloter la source de tension à partir d'une mesure des composantes à annuler.

On notera que l'invention qui vient d'être décrite permet la réalisation de certaines topologies électrotechniques qui ne pouvaient pas être mises en oeuvre en raison de la présence de courants homopolaires parasites à base fréquence saturant certains types de composants magnétiques.

Le système d'alimentation qui vient d'être décrit peut avantageusement être utilisé en utilisant des sources de tension d'appoint à basse tension en réglant de manière appropriée le rapport de transformation des divers bobinages associés au circuit actif de compensation, les sources basse tension étant meilleur marché et étant plus faciles à implémenter.

On notera par ailleurs que l'invention permet une optimisation des composants magnétiques grâce à la compensation active des flux homopolaires dans leur noyau. Les composants magnétiques sont alors moins lourds et, par conséquent, moins chers, l'essentiel des flux homopolaires étant annulé et ne magnétisant plus le noyau.

Avantageusement, afin de limiter la puissance de la source de tension d'appoint, seules les composantes basses fréquences des courants homopolaires Ihip peuvent être compensées, l'impédance des inductances homopolaires, notamment celle des transformateurs monophasés, triphasés ou des éléments inductifs du convertisseur servant alors à limiter les courants homopolaires à plus haute fréquence.

On conçoit par ailleurs que le composant actif de limitation et le composant électrique assurant la fonction de couplage différentiel, pour l'entrelacement ou le couplage des sources de tension, sont réalisés à partir d'une structure commune. En effet, le bobinage du composant actif est enroulé autour du même noyau que celui des transformateurs monophasés ou transformateurs interphases triphasés ou des éléments inductifs triphasés, notamment grâce à la présence de la colonne de retour bobiné, ce qui permet un gain en termes de volume, de poids, d'efficacité et de coût, le même composant permettant le couplage ou l'entrelacement des tensions de l'onduleur et la limitation des courants homopolaires de circulation.

Par ailleurs, la compensation active du courant homopolaire permet de réduire l'impédance minimale nécessaire des composants magnétiques et ainsi d'insérer plus d'entrefers dans ceux-ci, ce qui a pour bénéfice d'augmenter la linéarité du composant, et donc la robustesse du système.

Lorsque le système d'alimentation est couplé au réseau sans utiliser de transformateur, la compensation active permet de réduire la capacité additionnelle de mise à la terre et de réduire ainsi les courants de défaut capacitifs à la terre, engendrés en cas de défaut entre la phase et la terre du réseau d'alimentation.

On notera enfin que l'invention qui vient d'être décrite permet d'utiliser des stratégies usuelles d'ajout de tension homopolaire dans les convertisseurs de puissance pilotés par modulation par largeur d'impulsion (MLI), puisque cette tension homopolaire est compensée par le système de compensation active. Ces stratégies permettent d'optimiser notamment les pertes des convertisseurs, ainsi que les échauffements et le dimensionnement, et en particulier les pertes de rendement induites par l'ajout des équipements nécessaires à la compensation active et de ce fait cet équipement n'apporte pas de perte additionnelle sur le bilan des pertes totales du convertisseur.

## Revendications

1. Système de conversion d'énergie électrique délivrée par un réseau d'alimentation, comprenant un convertisseur (26) destiné à être raccordé au réseau d'alimentation et au moins un étage de limitation de courant homopolaire circulant dans le convertisseur, **caractérisé en ce que** le ou chaque étage de limitation comporte un circuit actif de compensation comprenant un composant magnétique (15) et une source de tension (33) raccordée au composant magnétique, ladite source de tension et ledit composant magnétique étant adaptés pour injecter en série avec le convertisseur une tension de compensation active des tensions homopolaires générées par ce convertisseur.

2. Système de conversion selon la revendication 1, dans lequel le circuit de compensation comporte une bobine (15) enroulée autour d'un noyau magnétique et raccordée à ladite source de tension.

3. Système selon l'une des revendications 1 et 2, dans lequel le convertisseur comporte un étage redresseur destiné à être raccordé au réseau d'alimentation et un étage onduleur (29) comprenant un ensemble d'au moins un onduleur raccordé en parallèle à un bus continu raccordé à la sortie de l'étage redresseur et apte à convertir le courant continu fourni par l'étage redresseur.

4. Système de conversion selon la revendication 3, dans lequel le circuit actif de compensation comprend un transformateur monophasé (32) raccordé à chaque polarité du bus continu entre l'étage onduleur et l'étage redresseur et équipé dudit circuit actif de compensation.

5. Système de conversion selon la revendication 4, dans lequel le circuit actif de compensation est formé par un enroulement tertiaire du transformateur monophasé couplé magnétiquement aux enroulements primaire et secondaire dudit transformateur.

6. Système de conversion selon l'une des revendications 4 et 5, comprenant une inductance de ligne (28, 30) raccordée du côté alternatif d'au moins l'un des étages onduleur et redresseur.

7. Système de conversion selon l'une quelconque des revendications 4 à 6, comprenant un transformateur d'interphase (34) raccordé du côté alternatif d'au moins l'un des étages onduleur et redresseur.

8. Système de conversion selon l'une des revendications 1 et 2, dans lequel le convertisseur comporte un ensemble de branches parallèles comprenant chacune un étage onduleur et un étage redresseur, et dans lequel le circuit actif de compensation comprend des transformateurs d'interphase triphasés adaptés pour raccorder en parallèle les branches parallèles du convertisseur, et comprenant chacun une colonne de retour de flux magnétique équipée dudit circuit actif de compensation.

9. Système de conversion selon la revendication 8, comprenant un enroulement raccordé à ladite source de tension et bobiné autour de la colonne de retour de flux magnétique.

10. Système de conversion selon l'une des revendications 8 et 9, dans lequel le convertisseur comporte un ensemble de branches parallèles comportant chacune un étage onduleur et un étage redresseur, le circuit actif de compensation comprenant un transformateur d'interphase (34) à colonne de retour de flux magnétique pour chaque branche.

11. Système de conversion selon l'une quelconque des revendications 8 à 10, dans lequel le convertisseur comporte un ensemble de branches parallèles comprenant chacune un étage onduleur et un étage redresseur, et comprenant en outre un ensemble de transformateurs d'interphase adaptés pour raccorder en parallèle les branches parallèles du convertisseur, à l'opposé des transformateurs d'interphase (34) à colonne de retour de flux magnétique.

12. Système de conversion selon l'une des revendications 1 et 2, dans lequel le convertisseur comporte un ensemble de branches parallèles comprenant chacune un étage onduleur et un étage redresseur, et dans lequel le circuit actif de compensation comprend des éléments inductifs triphasés (37) adaptés pour raccorder en parallèle les branches parallèles du convertisseur et comprenant chacun une colonne de retour de flux magnétique équipée dudit circuit actif de compensation.

13. Système de conversion selon la revendication 12, dans lequel la colonne de retour de flux magnétique comporte un enroulement (20) bobiné autour de la colonne de retour de flux magnétique.

14. Système de conversion selon l'une des revendications 11 et 12, dans lequel le circuit actif de compensation comprend un élément inductif triphasé (37) à colonne de retour de flux magnétique pour chaque branche.

15. Système de conversion selon la revendication 14, comprenant en outre un ensemble d'éléments inductifs triphasés aptes à raccorder en parallèle les branches parallèles du convertisseur à l'opposé des éléments inductifs triphasés à colonne de retour de flux magnétique.

16. Procédé de conversion d'énergie électrique délivrée par un réseau d'alimentation, au moyen d'un convertisseur (26) raccordé au réseau d'alimentation, dans lequel on réduit le courant homopolaire circulant dans le convertisseur, **caractérisé en ce que** le courant homopolaire est réduit en injectant en série avec le convertisseur (26) une tension de compensation active des tensions homopolaires générées par le convertisseur, ladite tension de compensation étant fournie par un circuit actif de compensation comprenant un composant magnétique et une source de tension raccordée au composant magnétique.
